# EUROPEAN PATENT APPLICATION

(11) **EP 3 824 774 A1**
(43) Date of publication of application: **26.05.2021**
(21) Application number: 19210863.7
(22) Date of filing: 22.11.2019
(51) Int. Cl.: A47J 31/44, A47J 45/07, B65D 43/00

(54) **WATER TANK LID**

(71) Applicant: BSH Hausgeräte GmbH, 81739 München (DE)
(72) Inventor: Gortnar, Primoz, 1215 Medvode (SI); Kozelj, Evgen, 3327 Smartno ob Paki (SI)

(57) **Abstract**

A water container (11) for a coffee machine (10) comprising a lid (13) with a deepen area (14) for covering the water container (11), a water inlet (18) and a handle (15) pivotally mounted on the lid (13) which in a first position covers the water inlet (18) and in a second position serves to carry the water container (11) wherein the water inlet (18) is covered by the handle (15) in a first position in which the handle (15) is aligned with the lid (13), rests on the lid (13) and blocks said lid (13) on the water container (11).

The present invention provides a water container of a coffee machine which can be filled with water in easy, hygienic and convenient way by the user.

## Description

### Background of the invention

The invention relates to a water container for a coffee machine comprising a lid with a deepen area for covering the water container, a water inlet and a handle pivotally mounted on the lid which in a first position covers the water inlet and in a second position serves to carry the water container.

### State of the art

Coffee machines are widely used in workplaces, homes, restaurants and public areas because of their advantageous features such as ability of preparing hot beverages in easy and intuitive way. To provide a fresh water which is necessary to perform the brewing process, coffee machines are equipped with water container which is removably connected with the coffee machine body. The water container should be refilled by the user as the water in the water container reach the minimum level which is necessary to prepare a hot beverage. Typically, water containers are provided with water level detection devices which are required to inform the user about necessity of refilling of the water tank.

The patent application US 2016 / 0 113 437 A1 discloses a water container for a beverage machine, in particular a fully automatic coffee machine, as well as a beverage machine comprising such a water container. With the goal of also ensuring the fallibility of the water container when attached to the beverage machine an of improving the manageability of the water container, which may be removable from the beverage machine, the water container may have a filling opening, which can be covered by means of a lid, wherein, when the water container is attached to the beverage machine, a filling area is defined above the filling opening, and wherein the lid can be guided by means of a guide device, which provides for a pivoting of the lid out of the filing area into at least one predetermined or predeterminable open position, so that the filing area can be accessed freely at least from the top.

The patent EP 2 721 975 B1 discloses a preparation machine has hinged lid which is removably provided in water tank, for opening and closing of the water tank. The lid is connected to water tank via arc-shaped guide element. The lid is rotatable around rotational axis and is secured along guiding grooves in water tank.

The patent application EP 3 412 182 A1 shows a water tank for a coffee machine equipped with a bifunctional element which movement is provided by a hinge geometry on the water tank and a cooperating sliding groove on the bifunctional element, wherein the bifunctional element in a first position is a cover for the water tank and in a second position a carrying handle for the water tank wherein the bifunctional element has at least one function part for unlocking and removing said bifunctional element from the water tank. The invention provides a simple and cheap bifunctional element which act in horizontal position as a cover for a water tank and in vertical position as a handle for the water tank. The bifunctional element is easy detachable from the water tank thanks to elastic function part in order to perform maintenance activities by the user in easy and fast way.

Presented solutions do not provide a water container for a coffee machine in which the water inlet of the water container is protected against contamination and which is convenient to use.

### The aim of the invention

It is the object of the present invention to provide a further development with an advantage over the state of the art and provide a water container for a coffee machine which is easy to handle and in which refiling of the water container is performed in easy and intuitive way without necessity of opening the lid, therefore in more hygienic way.

### Summary of the invention

The object is solved by a water container for a coffee machine whereby the water inlet is covered by the handle in a first position in which the handle is aligned with the lid, rests on the lid and blocks said lid on the water container.

The water container of a coffee machine is a removable reservoir which is placed in the vicinity of the coffee machine body. The water container is provided to store fresh water which is necessary to perform a coffee brewing process. The water container is equipped with a lid which covers the water container and prevents water from contamination or spilling. The lid of the water container is designed to prevent water spilling. For this reason the water container is provided with a lid with a deepen area which extends substantially below the upper edge of the water container. The lid is also equipped with the water inlet through which the water can be poured into the water container by the user without removing the lid. The water inlet is a simple opening which can be made in various shapes which allows the user to pour the water easily. The water inlet is placed in the deepen area of the lid. The handle in the first position is aligned with the lid what means that the upper edge of the handle is situated at the same level as the upper edge of the lid. In such position the handle is substantially entirely hidden in the deepen area of the lid.

The water container is also equipped with a handle which is movably disposed at the upper edge of the water container. When the handle is in vertical position the lid can be put on the water container. The vertical position of the handle is its first position and only is such position of the handle the lid can be mounted on the water container. In the first position the handle serves to carry the water container in order to e.g. clean or refill the water container. In the first position of the handle the access to the water inlet is free and the water container can be filled up with fresh water. In the second position the handle is substantially horizontal and rests on the lid. The handle is aligned with the lid what means that the upper edge of the handle in its second position is aligned with the upper edge of the lid. The handle is basically entirely hidden in the deepen area of the lid.

In another embodiment of the invention the handle has a blocking protrusions for blocking the handle in its second position which is substantially vertical. The handle is provided with a blocking protrusion which is a simple projection which engages with the blocking protrusion placed on the water container wall. Thanks to this engagement the handle is blocked in the second position in which serves as a carrying handle for the water container. In the second position of the handle the water inlet is opened and the water can be poured into the water container. The positive effect of blocking the handle in the second position is that the user has the free access to the water inlet.

In a preferred embodiment of the invention the handle has a thinned central section and a thickened circumferential section which is a rail for moving the handle into the water container. The central section of the handle is thinned for better handling of the water container. The central section also can be eliminated and can be a simple hole. The positive effect is that the access to the water inlet is possible all the time, without moving the handle into its second vertical position and the water container can be filled up with water straight from the external source e.g. bottle.

In the preferred embodiment of the invention the thinned central section of the handle is placed over the water inlet. In the first position of the handle which is substantially horizontal the water inlet is covered by the central section of the handle. The positive effect is that the water inside the water container is protected against contamination from the environment. The central section of the handle is made out of transparent material. The positive effect is that the user can see the water outlet which is placed under the handle. Moreover the presence of water can be seen through the transparent section of the handle so the user is able to make the decision about water container filling before water level reach its minimum level.

In another embodiment of the invention the lid is removable only when the handle is in its second position in which the handle is retractable into the water container. In the first position of the handle in which the handle rests on the lid said lid cannot be removed from the water container. In the second position of the handle, the lid of the water container can be removed in order to clean the water container or perform other activities e.g. maintenance activities.

### Brief description of the figures

Further details of embodiments of the invention together with additional objects and corresponding advantages will be best understood from the following description of specific embodiments and in connection with the accompanying drawings.

In the drawing:
- Fig. 1: shows a coffee machine with a water container in isometric view;
- Fig. 2: shows the water container with a lid and enlarged view of the handle;
- Fig. 3: shows the water container with the handle in its second position;
- Fig. 4: shows a cross section of a part of the handle and the water container.

### Detailed description of the invention

With reference to the attached drawing, the technical contents and detailed description of the present invention are describe thereinafter according to a preferable embodiment being not used to limit its executing scope. Any equivalent variation and modification made according to the appended claims is also covered by the claims claimed by the present invention.

In the following description of the preferred embodiment of the present invention, similar identical reference numbers designate identical or comparable components.

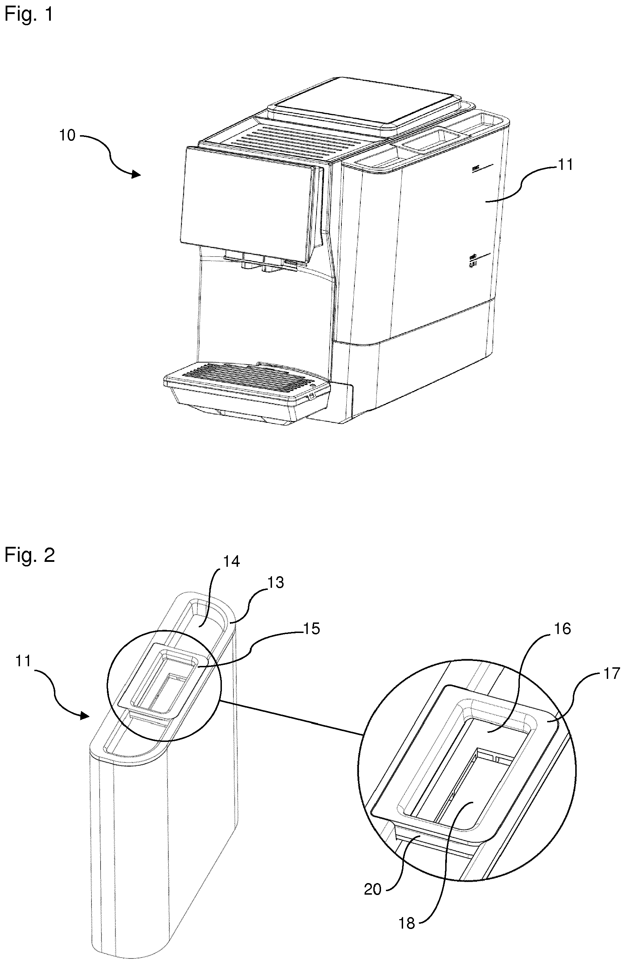

Fig. 1 shows a coffee machine 10 in with a water container 11 in isometric view. The coffee machine 10 is equipped with the water container 11 which is removable element of the coffee machine 10. The water container 11 can be removed in order to be filled up with water or in order to be cleaned.

Fig. 2 shows the water container 11 with a lid 13 and enlarged view of a handle 15. The lid 13 is an element provided with a deepen area 14. The deepen area 14 is a part of the lid which is placed in the central portion of the lid 13 and protrudes below the surface of the lid 13. The deepen area 14 is provided with a water inlet 18. The water inlet 18 is a simple hole of a rectangular shape through which the water can be poured into the water container 11 and through which the user can inspect the water level inside the water container 11.

The handle 15 rests on the lid 13 in its first position which is substantially horizontal.

In the first position the handle 15 also covers the water inlet 18 and prevents the lid 13 from being removed from the water container 11. The handle 15 has a central section 16 and a circumferential section 17. The central section 16 of the handle 15 is a simple hole through which the access to the water inlet 18 is possible. The circumferential section 17 is a thickened part of the handle 15 which is designed to make the handling comfortable. Additionally, the circumferential section 17 is a rail 20 which enables retracting the handle 15 into the water container 11 in order to remove the lid 13 from the water container 11.

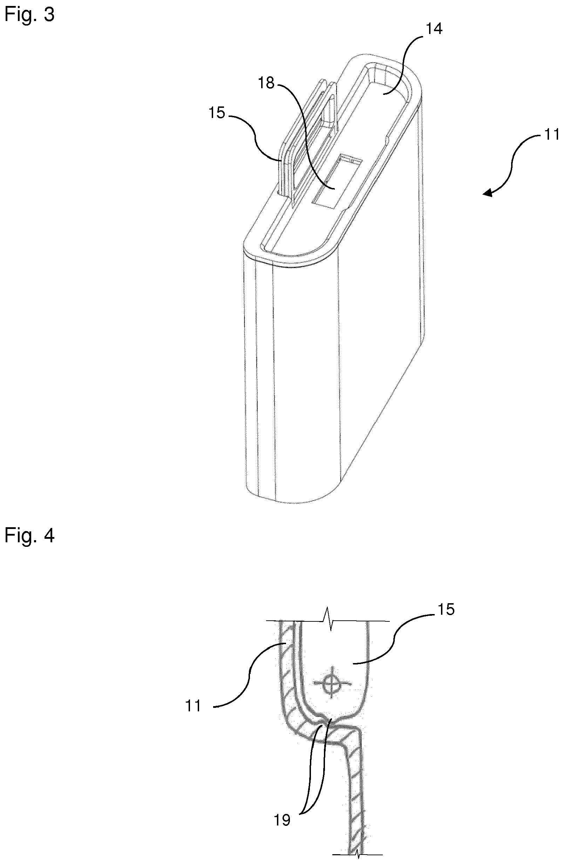

Fig. 3 shows the water container 11 with the handle 15 in its second position. In the second position the handle 15 is substantially vertical. The circumferential section 17 of the handle 15 is thickened and creates a rail 20 for the handle 15 which makes the retracting of the handle 15 into the water container 11 possible. When the handle 15 is its second position it serves as carrying handle 15 for whole water container 11. The water container 11 can be removed from the coffee machine 10 (not shown on the figure) in order to be e.g. cleaned.

Fig. 4 shows a cross section of a part of the handle 15 and the water container 11. The handle 15 and the water container 11 are provided with blocking protrusions 19. Blocking protrusions 19 of the handle 15 engages with the blocking protrusions 19 of the water container 11 and thanks to this engagement the handle 15 is blocked in its second vertical position.

The present invention provides a water container of a coffee machine which can be filled with water in easy, hygienic and convenient way by the user.

### REFERENCE SIGNS

- 10: coffee machine
- 11: water container
- 13: lid
- 14: deepen area
- 15: handle
- 16: central section
- 17: circumferential section
- 18: water inlet
- 19: blocking protrusions
- 20: rail

## Claims

1. A water container (11) for a coffee machine (10) comprising a lid (13) with a deepen area (14) for covering the water container (11), a water inlet (18) and a handle (15) pivotally mounted on the lid (13) which in a first position covers the water inlet (18) and in a second position serves to carry the water container (11) **characterized in that** the water inlet (18) is covered by the handle (15) in a first position in which the handle (15) is aligned with the lid (13), rests on the lid (13) and blocks said lid (13) on the water container (11).

2. The water container (11) according to claim 1, **characterized in that** the handle (15) has a blocking protrusions (19) for blocking the handle (15) in its second position which is substantially vertical.

3. The water container (11) according to any of the preceding claims, **characterized in that** the handle (15) has a thinned central section (16) and a thickened circumferential section (17) which is a rail (20) for moving the handle (15) into the water container (11).

4. The water container (11) according to any of the preceding claims, **characterized in that** the thinned central section (16) of the handle (15) is placed over the water inlet (18).

5. The water container (11) according to any of the preceding claims 3 to 4, **characterized in that** the central section (16) of the handle (15) is transparent.

6. The water container (11) according to any of the preceding claims, **characterized in that** the lid (13) is removable only when the handle (15) is in its second position in which the handle (15) is retractable into the water container (11).
